# EUROPEAN PATENT SPECIFICATION

(11) **EP 4 604 426 B1**
(45) Date of publication and mention of the grant of the patent: **07.10.2026**
(21) Application number: 25177477.4
(22) Date of filing: 26.08.2019
(51) Int. Cl.: G02B 6/27, G02B 27/01, F21V 8/00, G02B 1/14, H04J 14/06

(54) **REFLECTION SUPPRESSION IN NEAR EYE DISPLAYS**
REFLEXIONSUNTERDRÜCKUNG IN AUGENNAHEN ANZEIGEN
SUPPRESSION DE RÉFLEXION DANS DES AFFICHAGES PROCHES DE L' IL

(30) Priority: 26.08.2018 US 201862722903 P; 06.05.2019 US 201962843610 P
(43) Date of publication of application: 20.08.2025
(62) Document number(s) of the earlier application(s) in accordance with Art. 76 EPC: 22215231.6 / 4 212 929; 19855738.1 / 3 841 414
(73) Proprietor: Lumus Ltd., 7403631 Ness Ziona (IL)
(72) Inventor: DANZIGER, Yochay, Kfar Vadim (IL); RONEN, Eitan, Rechovot (IL); GELBERG, Jonathan, Modiin (IL); EISENFELD, Tsion, Ashkelon (IL); SHAPIRA, Amir, Ness Ziona (IL)
(74) Representative: Kancelaria Eupatent.pl Sp. z o.o.

(56) References cited:
- WO-A2-2013/049248
- US-B2- 9 880 383

## Description

### FIELD AND BACKGROUND OF THE INVENTION

The present invention relates to near-eye displays and, in particular, it concerns near-eye displays with various features for suppressing ghost images of bright objects.

Many near-eye display systems include a transparent light-guide optical element (LOE) or "waveguide" placed before the eye of the user, which conveys an image within the LOE by internal reflection and then couples out the image by a suitable output coupling mechanism towards the eye of the user. The output coupling mechanism may be based on embedded partial reflectors or "facets", or may employ a diffractive pattern. The description below will refer primarily to a facet-based coupling-out arrangement, but it should be appreciated that various features of the invention are also applicable to diffractive arrangements. Where applied to diffractive elements, the direction of extension of the facets referred to herein can be taken to refer to the direction of elements of the diffraction grating.

The waveguide and facets are at least partially transparent so that light from the surroundings (scenery) can pass through it, allowing the user a direct view of the real world. Some of the scenery light-rays are reflected by the facets and reach the eye at various angles, thereby generating unwanted 'ghost' images (reflections) of the real world. Documents US 9 880 383 B2 and WO 2013/049248 A2 are relevant to the present invention.

### SUMMARY OF THE INVENTION

The present invention is a near-eye display defined by the features of claim 1.

### BRIEF DESCRIPTION OF THE DRAWINGS

The invention is herein described, by way of example only, with reference to the accompanying drawings, wherein:
FIGS. 1A and 1B are schematic side and top views of an observer using a near-eye display constructed and operative according to the teachings of the present invention, illustrating various ambient light sources which may give rise to reflections to be suppressed;
FIG. 2A is an enlarged schematic side view of the near-eye display of FIG. 1A illustrating light ray paths for image illumination and for exemplary "ghost" light paths from ambient light sources;
FIGS. 2B and 2C are angular diagrams illustrating the angular relationships between various parts of the light ray paths for the image ray path and the ghost ray path of FIG. 2A;
FIG. 3A is an enlarged schematic side view of a light-guide optical element from the near-eye display of FIG. 1A illustrating an alternative set of exemplary "ghost" light paths from ambient light sources on the rear side of the light-guiding optical element;
FIG. 3B is an angular diagram illustrating the angular relationships between various parts of the light ray paths for the ghost ray path of FIG. 3A;
FIG. 3C is an enlarged schematic side view of a variant implementation of the light-guide optical element from the near-eye display of FIG. 1A;
FIGS. 4 and 5 are schematic top views illustrating the range of a field of regard of the observer through the near-eye display of FIG. 1A;
FIG. 6 is a view similar to FIG. 4 illustrating a range of angles at which incident ambient light rays from the rear of the light-guide optical element can reach the observer's eye after a single reflection at an internal facet of the light-guide optical element;
FIG. 7 is a view similar to FIG. 6 illustrating a variant implementation in which an area containing the internal facets is limited in order to suppress certain ghost light paths from reaching the observer's eyes;
FIGS. 8A and 8B are views similar to FIG. 7 illustrating use of an obstructing baffle according to a further aspect of an embodiment of the present invention to block certain ghost light paths from reaching the observer's eyes, shown with and without exemplary ray paths, respectively;
FIG. 8C is a view similar to FIG. 8A illustrating a variant of a binocular near-eye display according to an aspect of the present invention employing two non-coplanar light-guide optical elements deployed with an angle of between 10-30 degrees between them to better conform to a face curvature, illustrating the impact of this inclination on the baffle geometry;
FIG. 9A is a graph illustrating reflectance as a function of angle of incidence for coatings of an exemplary partially-reflective surfaces (facets) according to an implementation of the present invention;
FIG. 9B is a corresponding graph of reflectance as a function of angle of incidence for unmodified Fresnel reflection;
FIG. 10A is a schematic side view similar to FIG. 1A illustrating a variant implementation employing an external polarizing filter;
FIG. 10B is a view similar to FIG. 10A illustrating a variant implementation employing an internal polarizing filter;
FIGS. 10C and 10D are top views of the implementation of FIG. 10B without and with a lateral polarizing filter, respectively;
FIG. 10E is a view similar to FIG. 10A illustrating a variant implementation employing both an internal polarizing filter and an external polarizing filter;
FIG. 11 is a schematic top view of an implementation of the present invention illustrating typical incident angles of rays from ambient light sources compared to the field of regard of the scene directly viewed by the observer;
FIG. 12 is a graph illustrating reflectivity properties of a preferred anti-reflective coating as a function of incident angle for a surface of the light-guide optical element according to an aspect of an embodiment of the present invention;
FIG. 13 is a schematic representation of a micro-louver film for use in an implementation of a near-eye display according to a further aspect of an embodiment of the present invention;
FIGS. 14A-14C are schematic representations of eye position relative to facet positions in various implementations of a near-eye display using a light-guide optical element which includes two distinct sets of partially-reflective surfaces at different orientations;
FIG. 15A is a schematic illustration of a further example of a near-eye display using a light-guide optical element which includes two distinct sets of partially-reflective surfaces at different orientations, where primary reflected polarization vectors for both sets of facets are similarly aligned;
FIG. 15B is a schematic representation of an orientation of polarizing filter suitable for use with the light-guide optical element of FIG. 15A;
FIG. 16A is a partial schematic view of a near-eye display based on the light-guide optical element of FIG. 14A;
FIG. 16B is a schematic top view of the near-eye display of FIG. 16A implemented as binocular display with a non-uniform polarizing filter; and
FIG. 16C is a graph illustrating reflectance as a function of angle of incidence for the partially-reflective surfaces of the light-guide optical element in the implementation of FIGS. 16A and 16B.

### DESCRIPTION OF THE PREFERRED EMBODIMENTS

The present invention is a near-eye display.

The principles and operation of near-eye displays according to the present invention may be better understood with reference to the drawings and the accompanying description.

### Introduction and Classification of "Ghost Images"

In order to fully understand the various aspects of the present invention, it is important to identify various different directions from which incident light reaching the light-guide optical element (LOE) may generate "ghosts" that are potentially troubling to the eye of the observer.

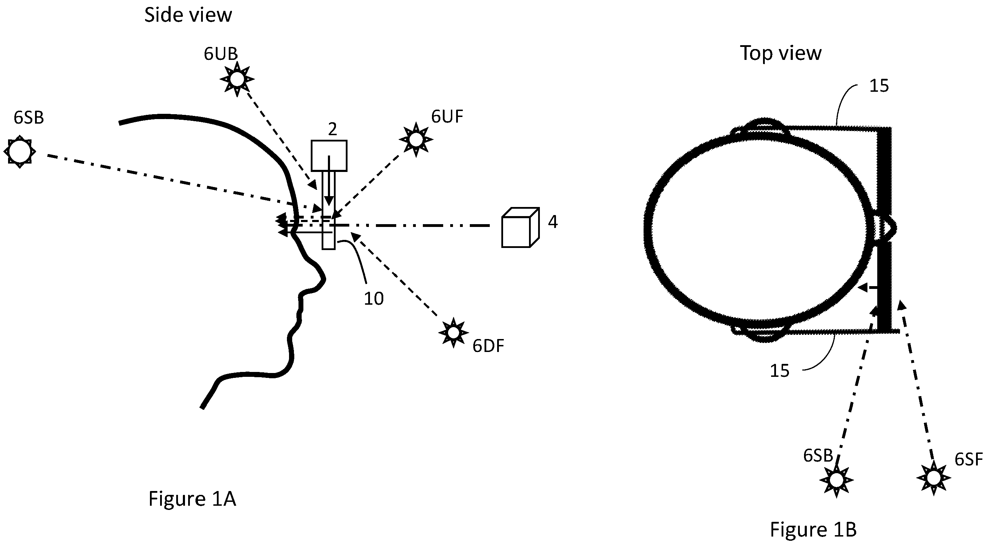

By way of introduction, Figure 1A shows schematically an observer looking through a near-eye display. In general terms, the near-eye display includes a light-guide optical element (LOE) or "waveguide" 10 having first and second major external surfaces 11A and 11B that are planar and mutually parallel, and having edges that are typically not optically active. An image projector 2 is optically coupled to LOE 10 so as to introduce in the LOE illumination corresponding to an image so that the illumination propagates within said LOE by internal reflection at major external surfaces 11A and 11B. Optical coupling of image projector 2 to LOE 10 may be achieved via a coupling prism with an obliquely angled input surface, or via a reflective coupling arrangement, via a side edge and/or one of the major external surface of the LOE.

Examples of suitable image projectors (or "PODs"), for example, employing an illumination source, a spatial light modulator such as an LCOS chip, and collimating optics, typically all arranged on surfaces of one or more PBS cube or other prism arrangement, are well known in the art. Similarly, suitable coupling-in configurations for coupling the image into the LOE, such as by use of a coupling-in reflector or by a suitably angled coupling prism, are well known in the art. Coupling between the image projector and the LOE may be direct, or may be via an additional aperture expanding arrangement for expanding the dimension of the aperture across which the image is injected in the plane of the LOE. For conciseness of presentation, neither the projector nor the coupling-in configuration will be discussed further herein, and their combination is represented here only schematically.

The near-eye display also includes a coupling-out arrangement deployed for coupling the illumination out of the LOE towards the eye of the observer for viewing by the observer. The coupling-out arrangement is illustrated herein as a plurality of mutually-parallel, partially-reflective surfaces (or "facets") 12A deployed within LOE 10 at an oblique angle to the major external surfaces 11A and 11B. The facets typically have angular-dependent coatings to provide high transmission at certain angles and partial reflection at other angles, as discussed further below. Various implementations of LOE's including such facets are commercially available from LUMUS Ltd. (Israel). Although the description herein refers primarily to facet-based coupling-out arrangements, it will be appreciated by one ordinarily skilled in the art that various of the aspects of the present invention are also applicable to alternative coupling-out arrangements, such as coupling-out arrangements based on diffractive optical elements.

The near-eye displays of the present invention are typically head-mounted displays, and therefore preferably include a support arrangement configured for supporting LOE 10 relative to the head of the observer with second major external surface 11B in facing relation to the eye of the observer. The support arrangement is shown schematically in FIG. 1B as a glasses frame structure including sides 15 for supporting the display relative to the ears of the observer. This is only one of a number of options including also a headband mounted structure and a display associated with a helmet. Details of the support arrangement per se are not critical to the present invention, and will not be described herein in detail.

As illustrated schematically in FIG. 1A, projector 2 injects light corresponding to the desired image (solid arrow) into the waveguide and this light is coupled out of the waveguide towards the observer's eye. Light from objects 4 in the scenery (double-dot-dash line) passes through the waveguide to the observer with some intensity degradation. Various potential directions of incidence of extraneous outside light are labeled with reference numeral 6 plus a two letter code indicating the direction: up, down or side (U, D or S, respectively) and front or back (F or B, respectively). The side directions are illustrated more clearly in the top view of FIG. 1B.

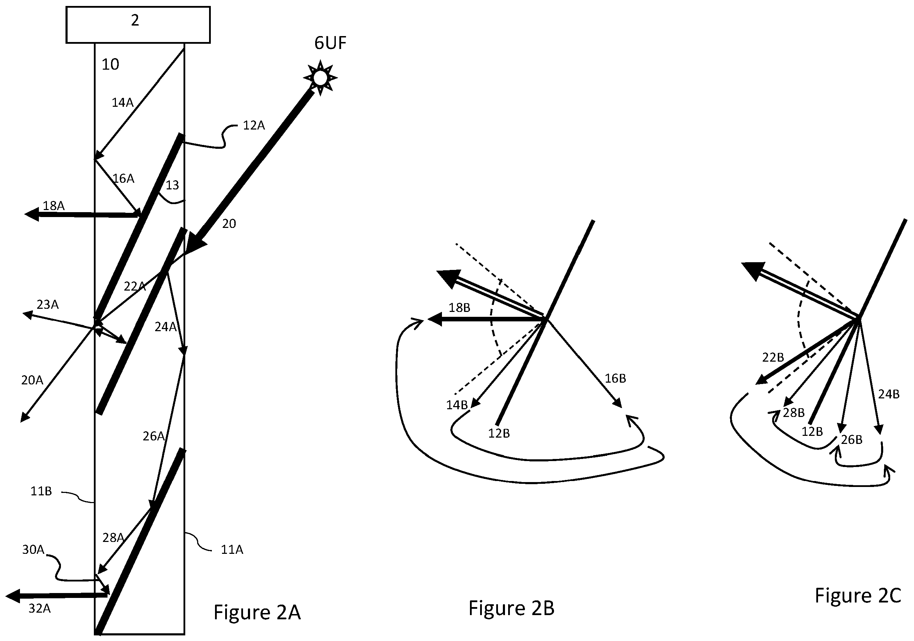

Figure 2A is an enlarged schematic view showing the projector 2, the waveguide 10 and selected internal facets 12A having an angle 13 relative to the major parallel external faces forming the front and rear of the waveguide. In the exemplary configuration illustrated here, the projector is on top (as in figure 1A). The facets are in this case typically horizontally-extending partial reflectors that couple-out the light from the waveguide and towards the observer's eye, although they are not necessarily exactly horizontal. In this example, only one light beam of the image is shown for clarity of presentation, but in practice, an angular spread of an image, typically collimated to infinity, is projected along the waveguide and coupled-out towards the eye. The spacing of the facets is presented as non-uniform in order to facilitate illustration of the paths of reflection, but is typically uniform.

The guided light of the image is represented here by rays 14A and 16A that reflect from the external faces of the waveguide. As ray 16A impinges on one of the facets, part of it reflects as ray 18A toward the observer. Figure 2B shows the corresponding ray directions in angular space where 12B corresponds to the angle of the plane of the facets 12A and the double arrow represents the vector of this plane (perpendicular to the plane applicable when diffractive element performs the out coupling). Vectors 14B, 16B and 18B represent the directions of rays 14A, 16A and 18A, respectively. The dashed angle in figures 2B and 2C represent the TIR angle of the external face of waveguide 10, i.e., that rays such as 18B which fall within the illustrated angular range will escape from the waveguide, while ray directions outside that range will be internally reflected.

Any architecture of a waveguide and an output coupling mechanism typically has inherently various undesired mechanisms of reflection from the scenery. Ray 20 originates from a source 6UF (a source in front of the user and above the normal field of view of the real world observed via the waveguide, which is a typical scenario of sunlight or overhead lighting) and refracts into the waveguide as ray 22A. This ray is shown in the angular space of figure 2C as vector 22B. Most of this light ray will pass through the waveguide and refract out of the waveguide as ray 20A, which is outside the normal field of view and does not disturb the observer. Part of ray 22A, however, may reflect from one of facets 12A (plane 12B) as ray 24A (vector 24B). This ray will be reflected by the external face of the LOE as ray 26A (vector 26B) and is reflected once more by one of facets 12A as ray 28A (vector 28B). The vector 28B is approximately the same as vector 14B, therefore the ray will continue to propagate the same way as 14A (14B) towards the observer's eye. This is presented as rays 30A (equivalent to 16A) and 32A (equivalent to 18A).

Another possible mechanism to generate disturbing ghost illumination is partial reflection of ray 22A from the rear surface 11B of the LOE, followed by partial reflection of that ray from facet 12A, thereby generating an output ray 23A.

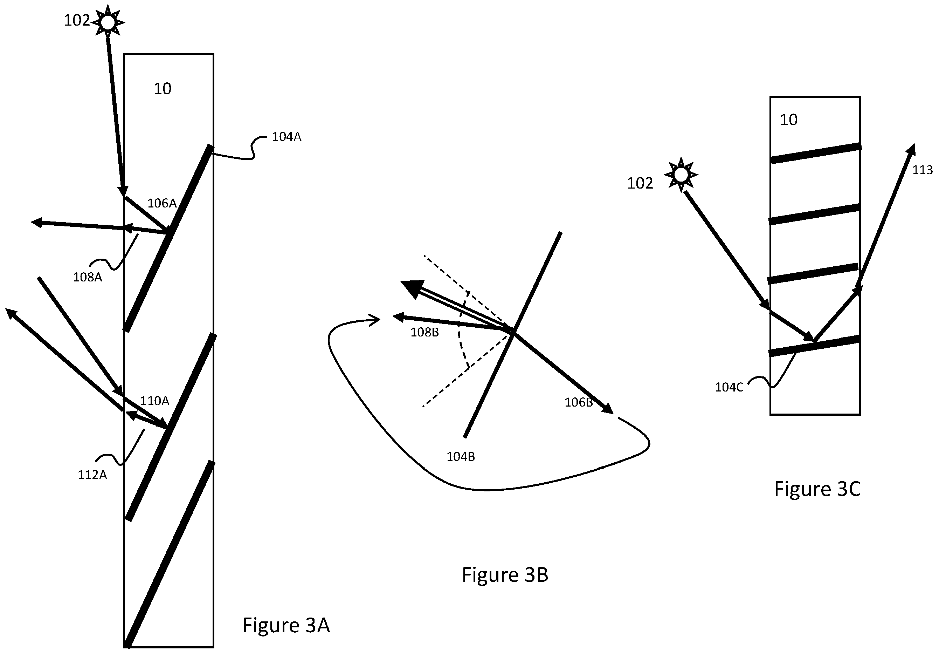

Figure 3A describes in real space the optical path of 'single reflection' from a source 102, in a case of side injection of an image into a light guide, where the extensional direction of the facets is roughly vertical. This source resembles sources 6SB in Figure 1B. Figure 3B describe the same process in angular space. The light from the source refracts into the waveguide as ray 106A (vector 106B), is reflected by facet 104A (plane 104B) as ray 112A (vector 112B) and refracts out of the waveguide. This process involves only one reflection by the facet, in contrast to other types of reflection paths that involve multiple facet reflections. Consequently, this single same side reflection may in some cases be a particularly bright reflection. As the scenery source illuminates at an angle further from grazing incidence, the reflection angle becomes larger, as illustrated by comparing rays 110A and 112A with rays 106A and 108A.

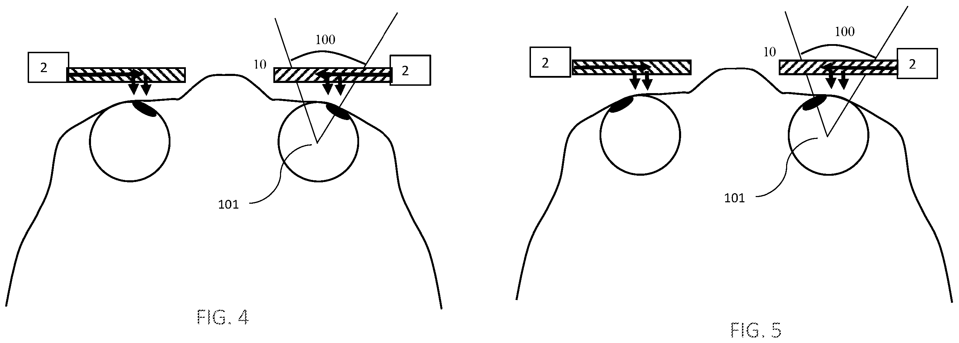

The geometry of the waveguide and its position relative to the eye determines the angular distribution of reflections that will reach the eye. Figures 4 and 5 show a top view of an observer's head. The relative positioning of the waveguide and the user's eyes is determined by a support structure, such as a glasses-frame support structure or some other head-mounted support structure, which is omitted here for simplicity of presentation. In this example, the waveguide 10 is configured with the image illuminated introduced from the side, as apparent from solid arrows and facets angle. The facets in this example are referred to as 'vertical facets'.

The pupil can move within a range of positions and orientations, but the central ray from central field crosses the center of the eyeball 101 towards the fovea in all directions of observation as shown in FIGS. 4 and 5. The angular field of interest for the observer is described as angle 100. Equivalent angles exist vertically. For clarity, other considerations for enlarging angle 100 are not include in the description, such as IPD or eye-box tolerances.

### Geometrical Blocking of Rear-Side Ghosts

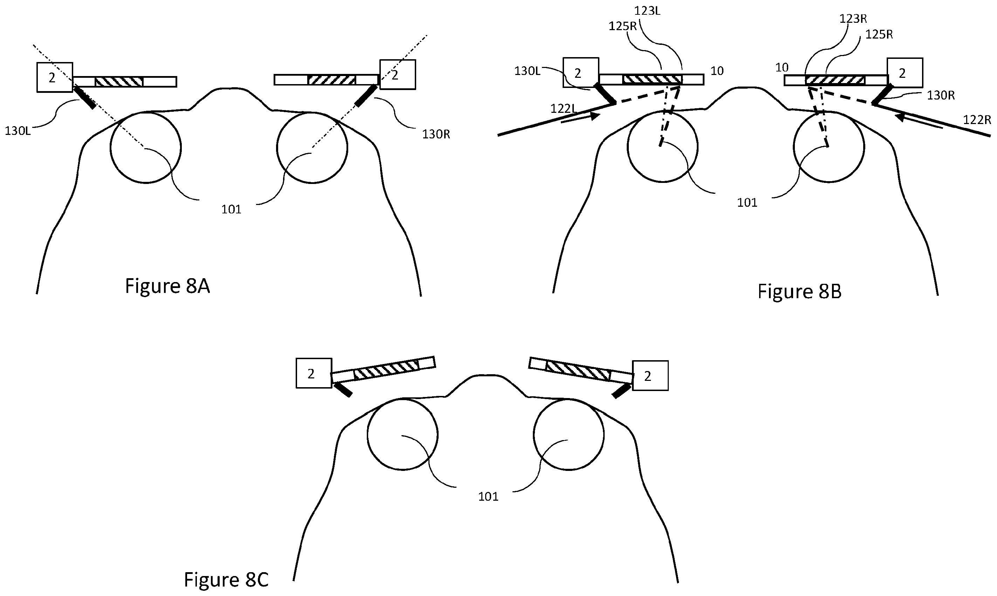

According to a first aspect of an embodiment of the present invention illustrated in FIGS. 8A-8C, the near-eye display is provided with a light-blocking baffle (130L, 130R) extending along a majority of one of the edges of the LOE and projecting from a plane of the second major external surface so as to block incident radiation from a range of glancing angles from reaching at least part of the second major external surface, the baffle projecting in a direction towards the eye of the observer forming an acute angle with the second major external surface, and most preferably projects in a direction towards a center of an eyeball of the observer. This ensures that the baffle has minimal impact on the peripheral field of view of the observer, leaving the observer with an impression of an unrestricted field of view.

The baffle preferably extends along an edge of the LOE that is substantially parallel to the direction of extension of the partially-reflective surfaces parallel to the major surfaces. According to a geometrical definition, the extensional direction of the facets parallel to the major surfaces may be defined as a line of intersection between a plane within which one of the partially-reflective surfaces lies and the plane of the first major external surface. "Substantially parallel" as used herein preferably refers to directions that are parallel or within about 20 degrees of each other.

According to a first option, the light-blocking baffle 130L, 130R is mechanically supported by attachment to the LOE 10. Alternatively, the light-blocking baffle is mechanically supported by attachment to the support arrangement (not shown in these drawings).

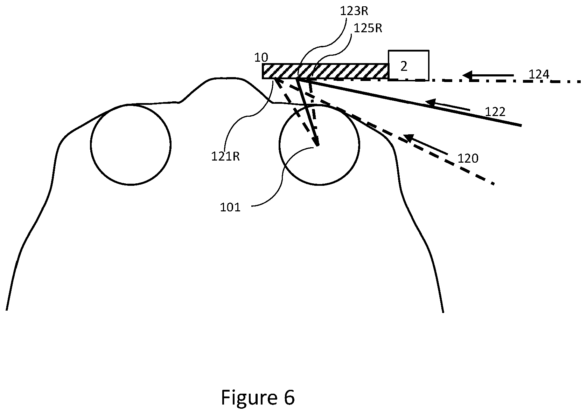

The preferred geometrical considerations for implementing the baffles are as follows. As discussed above, FIGS. 3A-3C present the angular dependence of rays that have undergone a single reflection as a function of the incident angle of illumination on the rear side of the light guide (3A , 3B) or single reflection from front side 3C. FIG. 6 illustrates the implications of this angular dependence in a top view of a near-eye display deployed on an observer's head. The waveguide 10 reflects scenery light ray 120 towards the center of the observer's eyeball 101 from point 121R on the waveguide, ray 122 from point 123R and grazing ray 124 from point 125R.

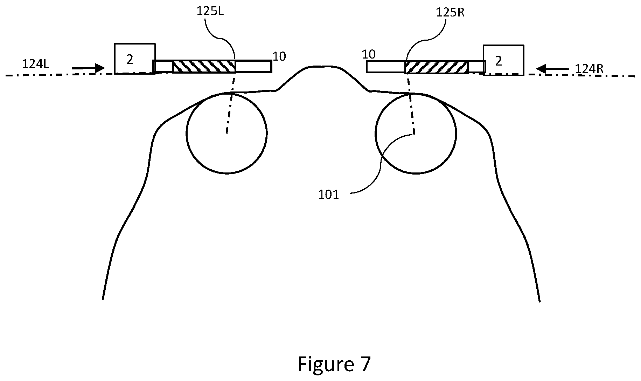

According to certain embodiments of an aspect of the present invention, the last facet (i.e., furthest from the image projector ) is located where reflection from critical angle ray resulting from a grazing-incidence ray from the scene (124R or L) can no longer reach eye center 101 as shown by 125 in Figure 7. The facets in the waveguide of the right (or left) eye terminate at the point where the ray 124R (L) reflect onto eye center 101. From figure 6, it is apparent that any other ray cannot reflect onto 101 since there are no facets to reflect the light there.

While the above approach may be effective to avoid single-reflection bright ghosts from rear-side ambient illumination in some scenarios, the geometrical limitation on the location of the "last facet" may not provide sufficient angular field of view for some applications. According to a further aspect of the present invention, using the geometrical relationship illustrated in FIG. 6 and after identifying the extent of the angular field of view required (e.g., extending to location 123R as illustrated in FIG. 6), it is possible to identify a limited range of angles (e.g., from ray 124 through the angle of ray 122) which need to be obstructed in order to avoid single-reflection ghosts from the region requiring output facets from reaching the observer's central vision.

The light-obscuring baffle 130L, 130R implemented according to these principles is typically relatively small, extending generally rearward from the periphery of the optical arrangement with greatly reduced obstruction to the observer's peripheral vision compared to a full side-blocking arrangement. In certain particularly preferred implementations, the baffles are implemented so as to extend from the periphery of the optical arrangement generally towards the eye, in some cases aligned with some feature of the projector and/or a frame side, so as to have little-to-no obscuring effect on the observer's peripheral vision.

In figure 8A an example of such obscuring baffles is shown. The baffles 130R and 130L are here shown as flat planes located at the edge of the waveguide and oriented toward 101 as shown by the dot-dashed line. For a predefined virtual FOV the length of the waveguide 10 with facets is defined 123R(L). The optical path of the back-reflection is defined and the baffle 130R(L) length is set to block this optical path of the rays reflected by the last facet as shown in figure 8B. Tilted waveguides can also use this scattering blocking as shown in figure 8C. In addition to conforming aesthetically to the "face curve" of the user, such inclined waveguides further relax the requirements on the dimensions of the baffle by casting a longer "shadow" across the rear surface of the waveguide for a given length of baffle.

Thus, most preferably, the deployment of baffle 130L, 130R and of the partially-reflective surfaces precludes ray paths from reaching the eye of the observer after entering one of the first and second major external surfaces and undergoing a single reflection from one of the partially-reflective surfaces.

### Exclusion of High Incident Angle Rays

A further aspect of an embodiment of the present invention, useful both alone and in combination with other aspects described herein, relates to approaches for managing incident rays which approach the first (outer) major external surface 11A of LOE 10 at high angles of incidence.

Referring again to FIG. 2A, it is noted that many of the problematic reflections of real-world light sources begin with high-angle incident rays, such as is illustrated here schematically as ray 20. If such rays can be excluded from entering the LOE at all, this would clearly avoid the incident radiation generating troublesome reflections towards the observer's eye.

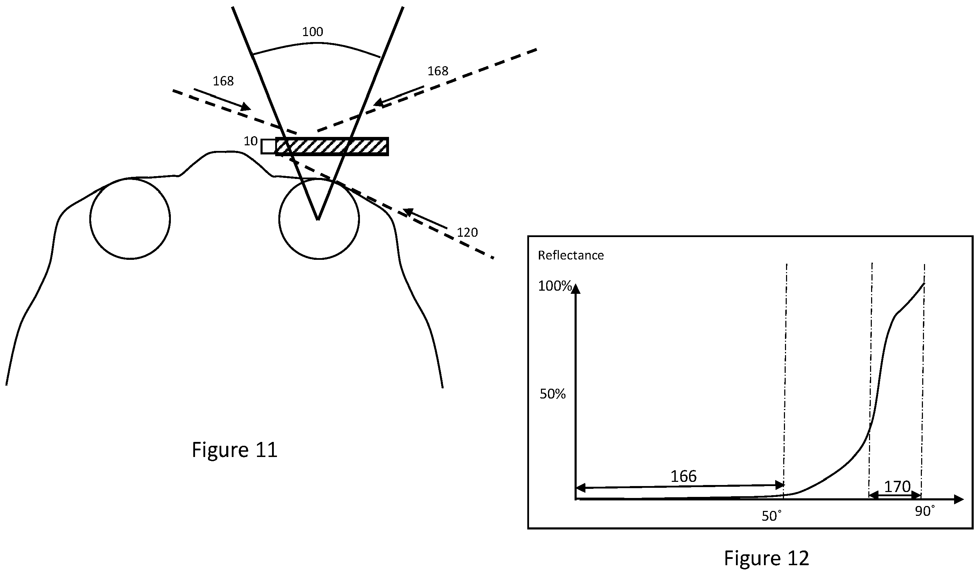

Proper coating of external facets of waveguide 10 can thus attenuate scenery reflection as presented in FIGS. 11 and 12. Angle 100 represents the angular field that an observer sees the surroundings through waveguide 10.

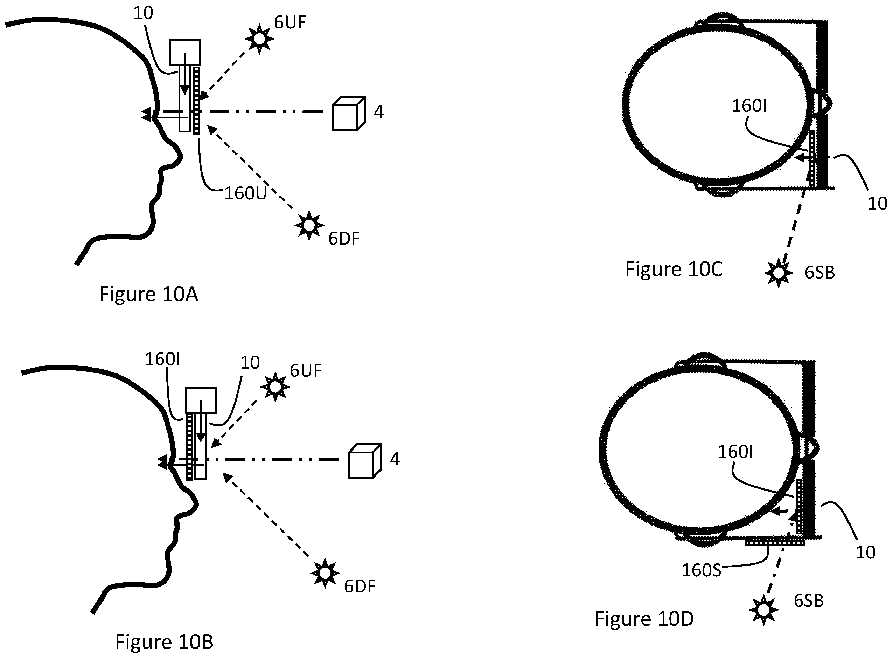

A preferred implementation of the angular reflectivity of the first (outer) surface of the waveguide having an anti-reflective coating is shown in FIG. 12. Angular range 166 represents the angle 100. In this range, the transmittance of the waveguide should be maximal. Light rays from scenery that are outside the range 100 originate from front 168 or back 120 (limited by facet reflectance, facet or observer face obscuration). The angular range of these rays is shown as 170 in figure 10B. According to one aspect of the present invention, the anti-reflection coating on the waveguide is modified to have high reflectivity at 170 and high transmittance at 166. (High reflectance at high angles is a common property of AR coatings designed for perpendicular light incidence.) This greatly reduces forward and backward scenery illuminations entering the waveguide 10 entering at high angle and reflecting by internal facets onto the eye.

Thus, according to the present invention, first (outer) major external surface 11A is coated with a multi-layer coating configured to provide anti-reflective properties for visible light incident at angles of incidence smaller than 40 degrees and to provide high reflectivity for at least a first polarization of visible light incident at angles of incidence greater than 70 degrees. Depending on the particular requirements for the directly viewed field of regard of the observer through the LOE and the likely directions from which problematic ambient illumination may be incident, it may be preferably to provide anti-reflective properties for angles up to 50 degrees and/or high reflectivity for angles above about 60 degrees, but the closer these limits become, the more demanding the coating requirements become, to the extent that they may become unrealistic or unreasonably complex to implement. In this context, "anti-reflective properties" preferably refers to reflectivity which is less than 5%, and most preferably less than 3%. "High reflectivity" in this context refers to reflectivity in excess of 70%, and preferably in excess of 80%, more preferably at least 90%, and in some particularly preferred cases, at least 95%.

When considering the ranges of angles from which external illumination may be incident, it may be difficult to achieve the desired exclusion of high angle of incidence (small grazing angle) for the entire FOV and for the entire visible spectrum. Therefore, in a particularly preferred implementation of the present invention, this reflectivity enhancement is optimized for only the S polarization of high angle incident illumination. An alternative solution is provided for reducing visibility of ghosts from P polarization illumination from an external source, as described below.

Specifically, referring to refracted ray 22A of FIG. 2A, according to the above approach, the residual light which is refracted at, and transmitted through, the front major surface of the light guide from incident ray 20 is likely to be substantially p-polarized due to the coating of the outer surface. Some of the ghost reflection ray paths involve a subsequent reflection of ray 22A at the second (rear) major external surface 11B of the substrate, such as to generate ghost ray 23A. However, due to refraction at the interface away from the major surface normal, any part of this light that is transmitted through the rear major surface 11B will continue on a steep downward path 20A substantially parallel to the direction of propagation of the ambient light 20 entering the front major surface of the LOE, and will not disturb the eye of the wearer of the near-eye display. It is therefore proposed to coat the back surface of the LOE with an anti-reflective coating in order to increase the transmission of the high incident angle rays. Achieving effective anti-reflective coating for P polarization at all angles is more feasible. As a result, this second aspect of the present invention complements the first aspect in that a large proportion of the incident external ghost illumination with S polarization can be excluded by external reflection at the front surface 11A while a large proportion of the P polarization ghost illumination can be transmitted at the rear surface 11B. The result is that the overall ghost illumination following the path illustrated in FIG. 2 is greatly reduced compared to existing LOEs.

Thus, according to this aspect of the present invention, second major external surface 11B is advantageously coated with a multi-layer coating configured to provide anti-reflective properties for visible light incident at angles of incidence smaller than 40 degrees and to provide low reflectivity for a second polarization of visible light perpendicular to the first polarization incident at angles of incidence between 70 degrees and at least about 85 degrees (preferably close to 90 degrees).

Referring again to Figure 2, regarding the alternative light ray path which may generate a ghost 32A, a ghost may be formed by residual ambient light which penetrates into the LOE and then reflects off a partially reflective facet of the light guide (e.g., from ray 22A to ray 24A or from ray 26A to ray 28A) in a relatively restricted range of angles which is typically different from the range of angles (and polarization orientation) in which the display signal propagates. It is therefore proposed to modify the design of the partially reflecting surface coating to substantially diminish the reflectivity within one or both of those particular ranges of angles. Specifically, facet coatings which suppress reflection for high-angle rays will tend to minimize the amount of light which enters the guided mode (i.e., the reflection from ray 22A to 24A) and thus suppress the intensity of ghost 32A.

### Micro-Louver Film Variant

As an alternative, or additional, implementation of the previous aspect of the present invention, rejection of high-angle incident light can be achieved using a louver film deployed in front of the outer surface of the LOE and configured to block light incident from high angles while providing high transmission of light from an external scene over a desired field of view. Micro-louver films are known, and are commonly used as "privacy films" for limiting visibility of computer displays to a desired range of viewing angles. Examples of such films are commercially available from the 3M^{©} Company under the description Advanced Light Control Film (ALCF).

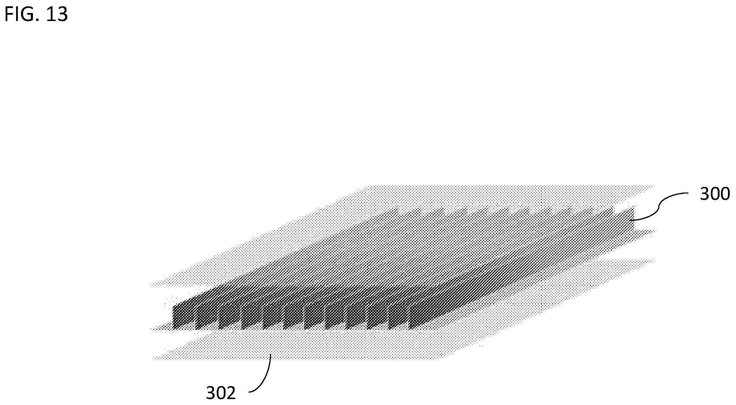

The structure of such films is illustrated schematically in FIG. 13, where an inner layer of the film contains an array of opaque (or highly attenuating) micro-louvers 300 supported in a transparent substrate 302 which define a geometrical limit to the angle at which incident light can pass through the film. Commercially available privacy films typically include a one-dimensional array of micro-louvers, i.e., where all of the louvers extend in the same direction. In this case, the film is preferably deployed relative to the LOE so that the louvers extend horizontally, thereby blocking high-angle external light sources coming from above. Alternatively, a two-dimensional array micro-louver structure may be used, having micro-louvers extending in two perpendicular directions (typically in two separate layers of the film structure, superimposed one on the other) to provide exclusion of high-angle external light sources from all sides.

In order to avoid impacting the optical properties of the LOE for internal reflection from the major surfaces, it is typically preferable to avoid applying light control film directly to the LOE surface. Optionally, a suitable structure may be provided to ensure that an air gap is maintained adjacent to the LOE, and the light control film is supported on a separate optical element (lens or the like) slightly spaced from the LOE. Alternatively, a buffer or "isolation" layer may be provided which has a sufficiently low effective refractive index to preserve the optical properties of the LOE. Examples for suitable materials for such layers are commercially available, and include aerogels and various other materials used for similar purposes. According to a further alternative implementation, an angularly-selective reflective coating, typically implemented using a multi-layer dielectric coating, may be provided to simulate TIR for the relevant range of angles for the image propagating within the LOE while allowing high transmission at small angles. This option also allows direct optical attachment of the micro-louver film to the coated surface of the LOE without compromising the optical properties of the LOE. Parenthetically, all of the above-mentioned options for applying supporting a micro-louver film relative to an LOE without impacting its optical properties are equally applicable where mention is made herein of a polarizing filter associated with one or both surfaces of the LOE.

In a particularly preferred implementation, the micro-louver layer 300 is associated with first major external surface 11A of the LOE 10, and blocks light incident at an angle of incidence greater than 70 degrees from at least one direction from entering the LOE. Where a micro-louver layer 300 having a one-dimensional array of micro-louvers is used, the micro-louver layer is preferably deployed with the extensional direction substantially horizontal. Alternatively, a micro-louver layer having two arrays of micro-louvers having substantially perpendicular extensional directions may be used.

### Polarization filtering

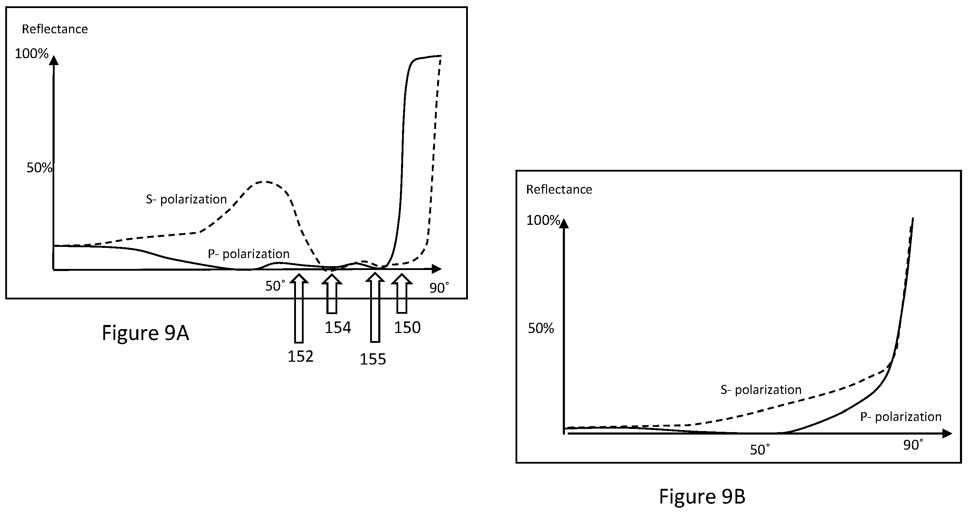

The design of coatings on the facets has a significant impact on reflection filtering. Figure 9A shows the angular reflectivity of a typical coating used on facets 12A and 40A. In most cases, the reflectivity is polarization dependent (or "polarization sensitive") as shown, as is also inherent to the basic Fresnel reflection properties (FIG. 9B).

Arrow 150 shows the angle corresponding to the reflection 26A(B) to 28A(B). For this coating and at this incident angle, P-polarization reflects more than S-polarization. Arrow 154 shows the angular reflection of 22A(B) to 24A(B) having low reflectivity and no polarization selectivity. In an alternative implementation employed for the facets of certain LOEs, 155 and 152 represent the angles of the reflection having a clearly dominant S-polarization. According to an aspect of an embodiment of the present invention, particular choices of facet tilt angle and/or coating profile can be used to harness polarization-dependent properties to suppress real world reflections, as will now be described.

Since the reflections (such as 6UF or 6DF) can be controlled to have predefined dominant polarization (for example, by suitable anti-reflective coatings as described above, or through properties of the facets themselves), ghost reflection attenuation is advantageously achieved by using a polarization filter or "polarizer" 160U in front of the waveguide as shown in FIG. 10A. Any suitable type of polarizer may be used, most preferably a structural (or "Cartesian") polarizer, and typically, an absorbent polarizer is used. This polarizer will attenuate the un-polarized light from the scenery 4 by 50% (which, in many cases, may anyway be required or desirable) but will attenuate the polarized upper-frontal reflection 6UF or the lower-frontal reflection 6DF by much more. The orientation of the polarizer should be set preferably relative to the orientation of the facets reflecting (perpendicular or horizontal to the facets depending on S or P blocking).

In some cases, the LOE and the coupling-out arrangement define at least one high-incident-angle polarization-dependent optical path incident on one of the first and second major external surfaces at an angle of incidence greater than 60 degrees and exiting the LOE towards the eye of the observer, where the polarization-dependent optical path has a favored orientation of polarization. A polarization filter is then advantageously deployed to prevent external light advancing along the polarization-dependent optical path with the favored orientation of polarization from reaching the eye of the observer. In the above example of FIG. 10A, polarization filter 160U is deployed externally to filter light entering the first (outer) major external surface 11A.

One implementation of an embodiment of the present invention is a waveguide having facet coating that is designed to generate reflections of a real-world ghost image having polarization that is perpendicular to the polarization of the coupled-out projected image. In this case, the polarizer can be placed on the inner side facing the observer as shown by 160I in figures 10B and 10C, i.e., where the polarization filter is deployed to filter light exiting the second major external surface towards the eye of the observer. This configuration can block reflection projecting onto the eye that originated also from back of the waveguide (6SB for example) and passes twice through the polarizer as apparent in figure 10C. However, this configuration should be used only if the virtual image projected by projector 2 illuminates the eye with minimal attenuation or distortion by this polarizer. In other words, where the image illumination coupled out of the LOE towards the eye of the observer is substantially polarized with an image polarization, and polarization filter 160I is deployed to block light having a polarization perpendicular to the image polarization.

In each case where a polarizer is used, it will be noted that the orientation of the polarizer is dictated by the facet structure, orientated so that the polarization of real-world ghost illumination which would potentially be reflected by the facets is attenuated while the polarization which is not significantly reflected by at least one of the sets of facets at its particular incident angle according to the ghost the ray path is allowed to pass. This results in a polarizer orientation which is in many cases angularly offset (for example, by at least 20 degrees, or at least 30 degrees, and in certain cases, by between 60 degrees and 120 degrees) from the normal polarized sunglasses deployment which transmits P-polarization and rejects S-polarization from horizontal surfaces.

Figure 10D show Implementation of side-polarizer 160S on the side of the system. This way the polarizer acts much the same as polarizer 160U to block the polarization that side-reflections from the waveguide (6SB). Preferably, the side polarizer is implemented with the front polarizer 160U or 160I so the intensity visibility of the scenery is the same from front or peripheral (side).

If 160I is used in conjunction with 160S (as shown in figure 10D) then the orientation of 160S is preferably perpendicular to 160I (i.e., crossed polarizing axes, such as one vertical and one horizontal), resulting in complete blocking of all side reflections while maintaining peripheral visibility.

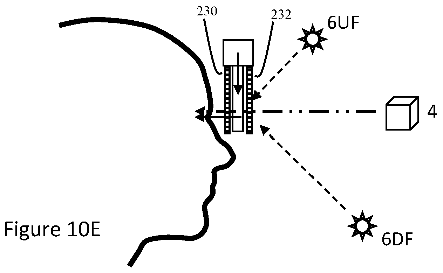

In some waveguide and facet architectures the virtual injected image impinges on the eye with a linear polarization. In such cases, a polarizer can be used closer to the eye (as shown in 10B), with the effect that some of the ghost reflections are filtered. However, in addition to this, some of scenery reflections also reflect at same polarization after polarization rotation in the waveguide. Since this polarization rotation does not happen to the direct scenery light rays 4, then introducing a second polarizer 232 (FIG. 10E) having the same orientation as 230, will not have any additional effect on the direct rays 4 but will introduce additional attenuation to reflections 6UF and 6DF.

### Variant Implementations for LOE with Two Sets of Facets

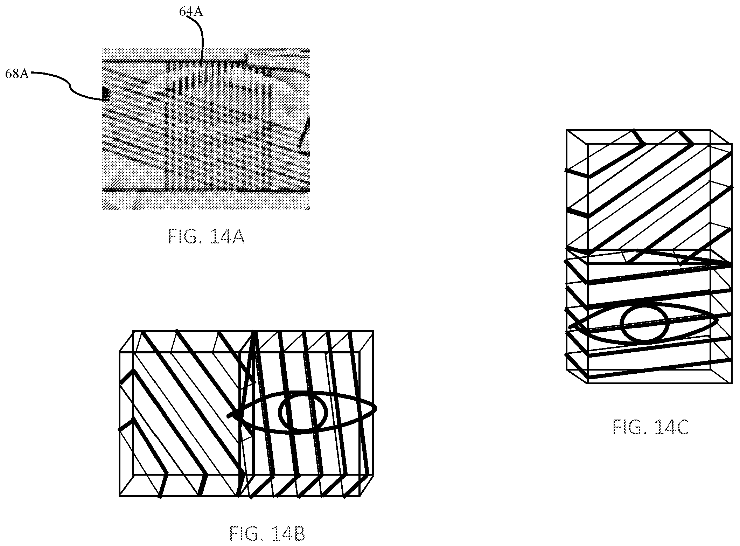

Certain implementations of an LOE according to the present invention employ two distinct non-parallel sets of partially-reflective surfaces to achieve optical aperture expansion in two dimensions within the LOE. Many of the above features for eliminating or attenuating (collectively, "suppressing") unwanted reflections of real world illumination (ghosts) are equally applicable to a 2D expansion LOE. Various additional considerations in some of these applications are addressed below with reference to FIGS. 14A-16C.

In FIG. 14A, facets 64A are located in front of the eye to reflect the guided image onto the eye. Facets 68A are used for optical aperture expansion by reflection from one guided image direction to a different guided image direction within the light guide, and do not couple to the eye. This makes it feasible in some cases to position these facets away from eye relevant field so as to eliminate the visibility of their direct reflections. Figure 14A shows an arrangement in which facets 68A are located lower than the eye center. Further overlap reduction is possible through a non-overlapping architecture as shown in figure 14B and 14C where the eye looks through a section with only with one type of facets.

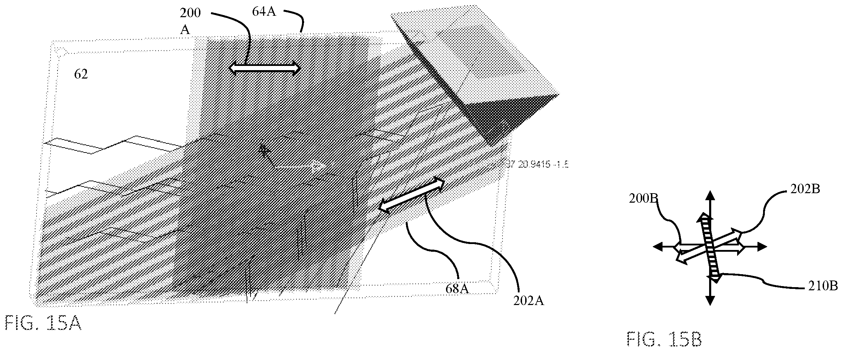

Figure 15A shows two overlapping sets of facets. The polarization architecture presented in FIGS. 10A-10E can be applied on both facet sets simultaneously. The polarizer efficiency is improved by manipulating the reflections from both polarizations to be close to parallel by setting one to be P and one S polarized as shown in figure 15A by 200A and 202A. Figure 15B shows overlay of the polarization orientations (200B and 202B) and preferred polarization orientation to block the combined polarization.

Alternatively the polarizer can be set perpendicular (or parallel) to the facets generating the dominant reflections.

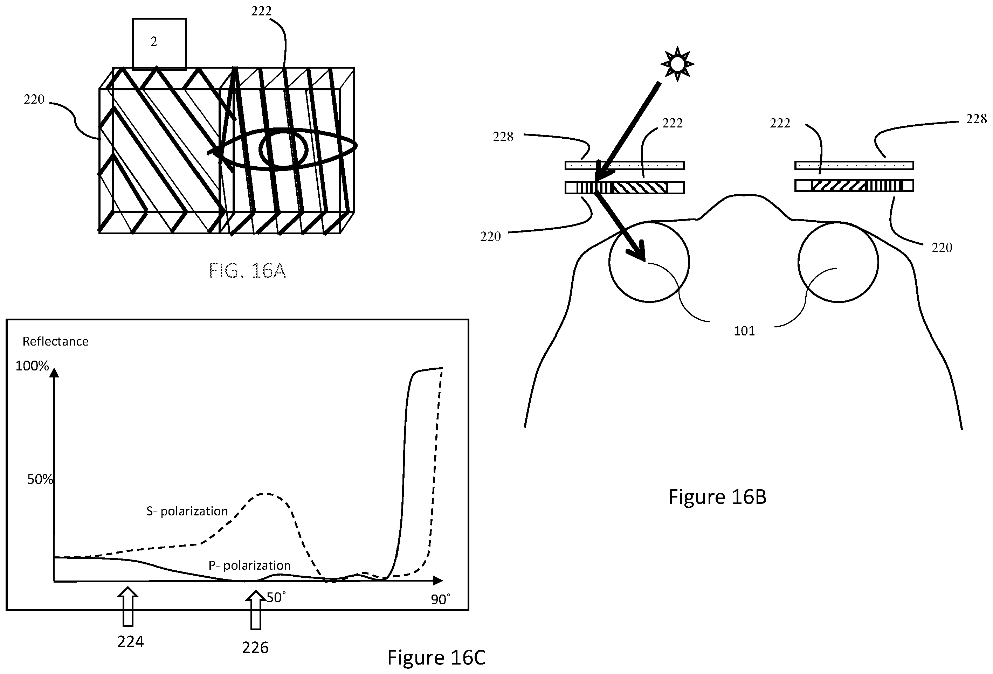

Figure 16A shows a waveguide having two sets of facets, where the slanted set of facets 220 is used for vertical aperture expansion of the injected image and the vertical set of facets 222 is used for horizontal expansion. Facets 220 can be tilted relative to external facets of the waveguide. In this case, the single facet reflection will typically be from behind as described in FIG. 6. However, if the facets 220 are perpendicular (or close to perpendicular) to the external faces of the light guide, then single reflection may occur from a direction in front of the light guide, as illustrated by the arrow of figure 16B.

Figure 16C shows reflectivity of a typical facet coating (the reflectivity is as described by 3C having approximately or accurately perpendicular facets) having typical reflection angle 224 and angle 226 of frontal single reflection (FIG. 16B). It is apparent that the back reflections will tend to be at angles 224 closer to perpendicular, where the dielectric coating will have low differentiation between the polarizations, while frontal reflection angles 226 will have high differentiation. Therefore, according to an aspect of the present invention, a polarizer 228 is placed in front of the waveguide that filters out the polarization that would otherwise give rise to a significant single frontal reflection.

Some coatings have inherent polarization selectivity also at perpendicular angles such as wire-grid or birefringent dielectric (as by 3M). In this case, a side polarizer (160S in figure 10D) can advantageously be used to achieve effective reflection attenuation.

The polarizer 228 can be designed to have different orientations in front of 220 and in front of 222 since the different orientations of the facets will generate reflections having different polarizations. Optionally, a non-linear polarizer which gradually transitions between the two desired polarization orientations may be used in order to avoid a sharp boundary.

Reflections can originate from multiple reflections by more than one set of facets. For example in figure 12A a reflection can have some degree of linear polarization after reflection by facets 68A and change to arbitrary polarization after reflection by facets 64A. In this case the specific polarization of the reflection should be calculated and non- linear polarizer used with the waveguide. This can include a wave-plate or other birefringent material with the linear polarizer.

The optical properties of the reflection that impinges onto the eye can change across the waveguide. Therefore the methodologies describe above, can be used non-uniformly across the waveguide to achieve reflection suppression all across the field-of-view of the observer. This can include (not limited to):
- Variable polarizer
- Variable wave-plate
- Variable coating of parallel and not parallel facets
- Variable coating of the external faces of the waveguide for varying transmittance and polarization

In all the above description, top-down configurations are equivalent to side, configuration and vertical facets are equivalent to horizontal. In other words, the arrangements are generally interchangeable; rotating the system by 90 degrees is possible. This includes the baffles, coatings and polarization.

It will be appreciated that the above descriptions are intended only to serve as examples, and that many other embodiments are possible within the scope of the present invention as defined in the appended claims.

## Claims

1. A near-eye display for projecting an image to an eye of an observer, the near-eye display comprising:
a light-guide optical element, LOE (10), having first (11A) and second (11B) major external surfaces that are planar and mutually parallel, wherein the second major external surface is configured to face the eye of the observer;
a coupling-in arrangement configured to couple illumination corresponding to the image into the LOE (10) so as to propagate within the LOE (10) by internal reflection at the first (11A) and second (11B) major external surfaces; and
a coupling-out arrangement (12A) configured to couple the illumination out of the LOE (10) towards the eye of the observer,
wherein the first (11A) major external surface is coated with a multi-layer coating configured to provide anti-reflective properties for visible light incident at angles of incidence smaller than 40 degrees and to provide high reflectivity for at least a first polarization of visible light incident at angles of incidence greater than 70 degrees.

2. The near-eye display of claim 1, wherein the second (11B) major external surface is coated with a multi-layer coating configured to provide anti-reflective properties for visible light incident at angles of incidence smaller than 40 degrees and to provide low reflectivity for a second polarization of visible light perpendicular to the first polarization incident at angles of incidence between 70 degrees and 85 degrees.

3. The near-eye display of claim 1, wherein the anti-reflective properties comprise a reflectivity that is less than 5%.

4. The near-eye display of claim 1, wherein the anti-reflective properties comprise a reflectivity that is less than 3%.

5. The near-eye display of claim 1, wherein the high reflectivity comprises a reflectivity greater than 70%.

6. The near-eye display of claim 1, wherein the high reflectivity comprises a reflectivity greater than 90%.

7. The near-eye display of claim 1, wherein the visible light corresponds to external illumination or ambient light.

8. The near-eye display of claim 1, wherein the first polarization is an S polarization.

9. The near-eye display of claim 1, wherein the second polarization is a P polarization.

10. The near-eye display of claim 1, further comprising a plurality of facets with coatings thereon configured to suppress reflection for high-angle rays.

11. The near-eye display of claim 1, further comprising a support arrangement (15) configured to support said LOE (10) relative to a head of the observer with the second (11B) major external surface facing the eye of the observer.

12. The near-eye display of claim 1, further comprising an image projector (2) configured to produce the illumination corresponding to the image.

13. The near-eye display of claim 12, wherein the image projector (2) is coupled with the coupling-in arrangement.

## Patentansprüche

1. Augennahe Anzeige zum Projizieren eines Bildes auf ein Auge eines Betrachters, wobei die augennahe Anzeige Folgendes umfasst:
ein optisches Lichtleiterelement, LOE (10), das eine erste (11A) und eine zweite (11B) Hauptaußenfläche aufweist, die eben und zueinander parallel sind, wobei die zweite Hauptaußenfläche dazu konfiguriert ist, dem Auge des Betrachters zugewandt zu sein;
eine Einkoppelanordnung, die dazu konfiguriert ist, dem Bild entsprechende Beleuchtung derart in das LOE (10) einzukoppeln, dass sich die Beleuchtung innerhalb des LOE (10) durch innere Reflexion an der ersten (11A) und zweiten (11B) Hauptaußenfläche ausbreitet; und
eine Auskoppelanordnung (12A), die dazu konfiguriert ist, die Beleuchtung aus dem LOE (10) in Richtung des Auges des Betrachters auszukoppeln,
wobei die erste (11A) Hauptaußenfläche mit einer Mehrschichtbeschichtung beschichtet ist, die dazu konfiguriert ist, Antireflexionseigenschaften für sichtbares Licht, das unter Einfallswinkeln kleiner als 40 Grad einfällt, bereitzustellen und einen hohen Reflexionsgrad für mindestens eine erste Polarisation von sichtbarem Licht, das unter Einfallswinkeln größer als 70 Grad einfällt, bereitzustellen.

2. Augennahe Anzeige nach Anspruch 1, wobei die zweite (11B) Hauptaußenfläche mit einer Mehrschichtbeschichtung beschichtet ist, die dazu konfiguriert ist, Antireflexionseigenschaften für sichtbares Licht, das unter Einfallswinkeln kleiner als 40 Grad einfällt, bereitzustellen und einen niedrigen Reflexionsgrad für eine zweite, zur ersten Polarisation senkrechte Polarisation von sichtbarem Licht, das unter Einfallswinkeln zwischen 70 Grad und 85 Grad einfällt, bereitzustellen.

3. Augennahe Anzeige nach Anspruch 1, wobei die Antireflexionseigenschaften einen Reflexionsgrad umfassen, der weniger als 5 % beträgt.

4. Augennahe Anzeige nach Anspruch 1, wobei die Antireflexionseigenschaften einen Reflexionsgrad umfassen, der weniger als 3 % beträgt.

5. Augennahe Anzeige nach Anspruch 1, wobei der hohe Reflexionsgrad einen Reflexionsgrad größer als 70 % umfasst.

6. Augennahe Anzeige nach Anspruch 1, wobei der hohe Reflexionsgrad einen Reflexionsgrad größer als 90 % umfasst.

7. Augennahe Anzeige nach Anspruch 1, wobei das sichtbare Licht externer Beleuchtung oder Umgebungslicht entspricht.

8. Augennahe Anzeige nach Anspruch 1, wobei die erste Polarisation eine S-Polarisation ist.

9. Augennahe Anzeige nach Anspruch 1, wobei die zweite Polarisation eine P-Polarisation ist.

10. Augennahe Anzeige nach Anspruch 1, ferner umfassend eine Mehrzahl von Facetten mit Beschichtungen darauf, die dazu konfiguriert sind, Reflexion für Strahlen mit großem Winkel zu unterdrücken.

11. Augennahe Anzeige nach Anspruch 1, ferner umfassend eine Trageanordnung (15), die dazu konfiguriert ist, das LOE (10) relativ zu einem Kopf des Betrachters derart zu tragen, dass die zweite (11B) Hauptaußenfläche dem Auge des Betrachters zugewandt ist.

12. Augennahe Anzeige nach Anspruch 1, ferner umfassend einen Bildprojektor (2), der dazu konfiguriert ist, die dem Bild entsprechende Beleuchtung zu erzeugen.

13. Augennahe Anzeige nach Anspruch 12, wobei der Bildprojektor (2) mit der Einkoppelanordnung gekoppelt ist.

## Revendications

1. Affichage proche de l'œil pour projeter une image vers un œil d'un observateur, l'affichage proche de l'œil comprenant :
un élément optique de guide de lumière, LOE (10), présentant des première (11A) et deuxième (11B) surfaces externes principales qui sont planes et mutuellement parallèles, dans lequel la deuxième surface externe principale est configurée pour faire face à l'œil de l'observateur ;
un agencement de couplage d'entrée configuré pour coupler un éclairage correspondant à l'image dans le LOE (10) de manière que l'éclairage se propage à l'intérieur du LOE (10) par réflexion interne sur les première (11A) et deuxième (11B) surfaces externes principales ; et
un agencement de couplage de sortie (12A) configuré pour coupler l'éclairage hors du LOE (10) vers l'œil de l'observateur,
dans lequel la première (11A) surface externe principale est revêtue d'un revêtement multicouche configuré pour fournir des propriétés antireflet pour une lumière visible incidente sous des angles d'incidence inférieurs à 40 degrés et pour fournir une réflectivité élevée pour au moins une première polarisation d'une lumière visible incidente sous des angles d'incidence supérieurs à 70 degrés.

2. Affichage proche de l'œil selon la revendication 1, dans lequel la deuxième (11B) surface externe principale est revêtue d'un revêtement multicouche configuré pour fournir des propriétés antireflet pour une lumière visible incidente sous des angles d'incidence inférieurs à 40 degrés et pour fournir une faible réflectivité pour une deuxième polarisation, perpendiculaire à la première polarisation, d'une lumière visible incidente sous des angles d'incidence compris entre 70 degrés et 85 degrés.

3. Affichage proche de l'œil selon la revendication 1, dans lequel les propriétés antireflet comprennent une réflectivité qui est inférieure à 5 %.

4. Affichage proche de l'œil selon la revendication 1, dans lequel les propriétés antireflet comprennent une réflectivité qui est inférieure à 3 %.

5. Affichage proche de l'œil selon la revendication 1, dans lequel la réflectivité élevée comprend une réflectivité supérieure à 70 %.

6. Affichage proche de l'œil selon la revendication 1, dans lequel la réflectivité élevée comprend une réflectivité supérieure à 90 %.

7. Affichage proche de l'œil selon la revendication 1, dans lequel la lumière visible correspond à un éclairage externe ou à une lumière ambiante.

8. Affichage proche de l'œil selon la revendication 1, dans lequel la première polarisation est une polarisation S.

9. Affichage proche de l'œil selon la revendication 1, dans lequel la deuxième polarisation est une polarisation P.

10. Affichage proche de l'œil selon la revendication 1, comprenant en outre une pluralité de facettes portant des revêtements configurés pour supprimer la réflexion pour des rayons à angle élevé.

11. Affichage proche de l'œil selon la revendication 1, comprenant en outre un agencement de support (15) configuré pour supporter ledit LOE (10) par rapport à une tête de l'observateur, la deuxième (11B) surface externe principale faisant face à l'œil de l'observateur.

12. Affichage proche de l'œil selon la revendication 1, comprenant en outre un projecteur d'image (2) configuré pour produire l'éclairage correspondant à l'image.

13. Affichage proche de l'œil selon la revendication 12, dans lequel le projecteur d'image (2) est couplé à l'agencement de couplage d'entrée.
